# EUROPÄISCHE PATENTSCHRIFT

(11) **EP 0 695 221 B1**
(45) Veröffentlichungstag und Bekanntmachung des Hinweises auf die Patenterteilung: **04.12.1996**
(21) Anmeldenummer: 94916171.5
(22) Anmeldetag: 29.04.1994
(51) Int. Cl.: B02C 18/18, B02C 18/12

(54) **MESSERSATZ FÜR DAS SCHNEIDWERK EINES GARTENHÄCKSLERS**
BLADE ASSEMBLY FOR THE CUTTING MECHANISM OF A GARDEN CHIPPER
JEU DE LAMES POUR LE SYSTEME DE COUPE D'UNE HACHE-PAILLE DE JARDIN

(30) Priorität: 30.04.1993 DE 4314223
(43) Veröffentlichungstag der Anmeldung: 07.02.1996
(73) Patentinhaber: Gloria-Werke H. Schulte-Frankenfeld GmbH & Co., D-59329 Wadersloh (DE)
(72) Erfinder: SCHULTE-FRANKENFELD, Manfred, D-33332 Gütersloh (DE)
(74) Vertreter: Patentanwälte Dipl.-Ing. Bodo Thielking Dipl.-Ing. Otto Elbertzhagen
(86) Internationale Anmeldenummer: EP9401363
(87) Internationale Veröffentlichungsnummer: WO9425165

(56) Entgegenhaltungen:
- DE-A- 2 235 265
- DE-U- 9 115 919

## Beschreibung

### TECHNISCHES GEBIET

Die Erfindung bezieht sich auf einen Messersatz für das Schneidwerk eines Gartenhäckslers, bestehend aus einer Mehrzahl von Messerscheiben mit entlang deren Umfang vorstehenden Schneiden, die koaxial miteinander, aneinander anliegend auf einem drehend angetriebenen Mitnehmerteller in den Schneidraum für das Häckslergut vorragend drehfest angeordnet werden.

### STAND DER TECHNIK

Aus dem deutschen Gebrauchsmuster DE-G 91 15 919.9 ist ein solcher Messersatz bekannt, der eine Mehrzahl von Messerscheiben mit entlang deren Umfangs vorstehenden Schneiden aufweist, welche koaxial auf einem drehend angetriebenen Mitnehmerteller aneinander anliegend angeordnet sind. Dort erfolgt die Drehmitnahme der einzelnen Messerscheiben über Stifte oder Bolzen, die achsparallel durch sämtliche Messerscheiben hindurchtreten und in eine Öffnung des Mitnehmertellers eingreifen.

Die Offenlegungsschrift DE-A-22 35 265 beschreibt den Aufbau eines Messerkopfes für Fleischereikutter mit einem Messersatz, bei dem jedes Messer eine bestimmte Längen- und Winkelposition hat. Dazu sind an den einzelnen Messern Formschlußelemente vorhanden, die bei benachbarten Messern ineinandergreifen und eine falsche Montage der Messer auf der Messerwelle verhindern. Insoweit haben hier die Formschlußelemente der Messer den Zweck einer Kodierung, sie dienen nicht der Drehmitnahme.

### DIE ERFINDUNG

Ausgehend vom Stand der Technik liegt der Erfindung die Aufgabe zugrunde, bei einem Messersatz der gattungsbildenden Art die Drehmitnahme der Messerscheibe zu vereinfachen sowie sicherer zu machen und - in Drehrichtung gesehen- unterschiedliche Eingriffslagen der benachbarten Messer relativ zueinander zu ermöglichen.

Diese Aufgabe wird bei einem Messersatz der gattungsgemäßen Art nach der Erfindung dadurch gelöst, daß jede Messerscheibe an ihrer ersten Seite Vorsprünge und an ihrer zweiten Seite Vertiefungen auf Teilkreisen gleichen Durchmessers zur formschlüssigen Aufnahme der Vorsprünge der jeweils benachbart anzuordnenden Messerscheibe hat, daß die Anzahl der Vertiefungen an der zweiten Seite der Messerscheiben größer als die der Vorsprünge an der ersten Seite ist, wobei die Teilung der Vertiefungen und der Vorsprünge auf mehrere zueinander drehwinkelversetzte Eingriffslagen benachbarter Messerscheiben abgestimmt ist und daß die Teilung der Schneiden am Umfang der Messerscheiben von der der Vorsprünge sowie der Vertiefungen verschieden ist.

Für die Erfindung ist wesentlich, daß die Drehmitnahme der Messerscheiben des Messersatzes von Messerscheibe zu Messerscheibe erfolgt, also ein alle Messerscheiben verbindendes Mitnahmeglied entfällt. Die Vorsprünge der einen Messerscheibe und die entsprechenden Vertiefungen der nächsten Messerscheibe können ohne große Manipulationen miteinander in Eingriff gebracht werden, was die Montage vereinfacht.Ferner können die einzelnen, benachbarten Messerscheiben nicht nur in einer einzigen vorbestimmten Lage über ihre Vorsprünge und Vertiefungen miteinander in Eingriff gebracht werden, sondern - in Drehrichtung gesehen - unterschiedliche Eingriffslagen zueinander einnehmen, weil die Anzahl der Vertiefungen an der zweiten Seite der Messerscheiben größer als die der Vorsprünge an der ersten Seite ist und die Teilungen der Vertiefungen und der Vorsprünge auf mehrere zueinander drehwinkelversetzte Eingriffslagen benachbarter Messerscheiben abgestimmt sind. Der mögliche Versatz benachbarter Messerscheiben zueinander dient dazu, die Schneidenanordnungen am Umfang des gesamten Messersatzes ändern zu können. Grundsätzlich können die Schneiden miteinander fluchtend ausgerichtet werden, also entlang von Mantellinien des Messersatzes verlaufen. Zweckmäßig kann aber auch eine unregelmäßige Anordnung der Schneiden am Umfang des gesamten Messersatzes sein, bei der dann die Schneiden nach Art einzelner Zähne vorstehen. Damit eine solche Wahlfreiheit bei der Zusammenstellung des Messersatzes bestehe, ist die Teilung der Schneiden am Umfang der Messerscheiben von der der Vorsprünge sowie der der Vertiefungen verschieden. Insbesondere macht man die Teilung der Schneiden ungeradzahlig und die der Vorsprünge sowie der Vertiefungen geradzahlig.

Zweckmäßig haben die Vorsprünge der Messerscheiben die Gestalt vorstehender Nocken und die Vertiefungen der Messerscheiben die Gestalt formschlüssig daran angepaßter Löcher, wobei im übrigen die beiden Seiten jeder Messerscheibe zueinander planparallel sind. Damit ist bei ausreichender Drehmitnahme der Bereich der Formschlußglieder räumlich eingegrenzt.

In vorteilhafter Ausbildung des neuen Messersatzes sind die Vorsprünge einstückig an den Messerscheiben angeformt. Dies kann im Stanz- oder Kaltschmiedeverfahren erfolgen, wobei sich an den Stellen der herausgedrückten Vorsprünge an der zweiten Seite der jeweiligen Messerscheibe in Form einer Negativkontur zu dem betreffenden Vorsprung eine Einbuchtung ergibt, die als Vertiefung oder als zusätzliche Vertiefung für den Eingriff der Vorsprünge der benachbart anzuordnenden Messerscheibe genutzt werden kann. In Ergänzung dazu können die Vertiefungen teilweise durch Durchgangslöcher in den Messerscheiben gebildet sein, diese Löcher können beim Verformvorgang der Messerscheiben eingestanzt werden.

Die Herstellung der Messerscheiben vereinfacht sich, wenn die Vorsprünge und die Vertiefungen im wesentlichen im Querschnitt kreisrund sind. Grundsätzlich können die Vorsprünge und Vertiefungen auch leicht konisch gestaltet sein, im wesentlichen sind sie zweckmäßigerweise jedoch zylindrisch bzw. hohlzylindrisch.

Für die Drehmitnahme des gesamten Messersatzes hat der Mitnehmerteller vorteilhaft zumindest eine den Vertiefungen der Messerscheiben entsprechende Aufnahmeöffnung für den zumindest einen Vorsprung der benachbarten Messerscheibe. Entsprechend weist der Mitnehmerteller mehrere Vertiefungen auf, sofern die ihm benachbart anzuordnende Messerscheibe eine Mehrzahl solcher Vorsprünge hat.

### KURZBESCHREIBUNG DER ZEICHNUNGSABBILDUNG

Die Erfindung wird nachfolgend anhand der Zeichnung an einem Ausführungsbeispiel noch näher erläutert. Dabei zeigen:
- Fig. 1: eine schematische, teilgeschnittene Seitansicht eines Gartenhäckslers im Bereich seines Schneidwerks,
- Fig. 2: die Draufsicht auf eine Messerscheibe des Messersatzes für ein Schneidwerk nach Fig. 1,
- Fig. 3: einen Schnitt durch die Messerscheibe von Fig. 2 entlang der Linie III-III und
- Fig. 4: einen Schnitt durch die Messerscheibe von Fig. 2 entlang der Linie IV-IV.

### BESTER WEG ZUR AUSFÜHRUNG DER ERFINDUNG

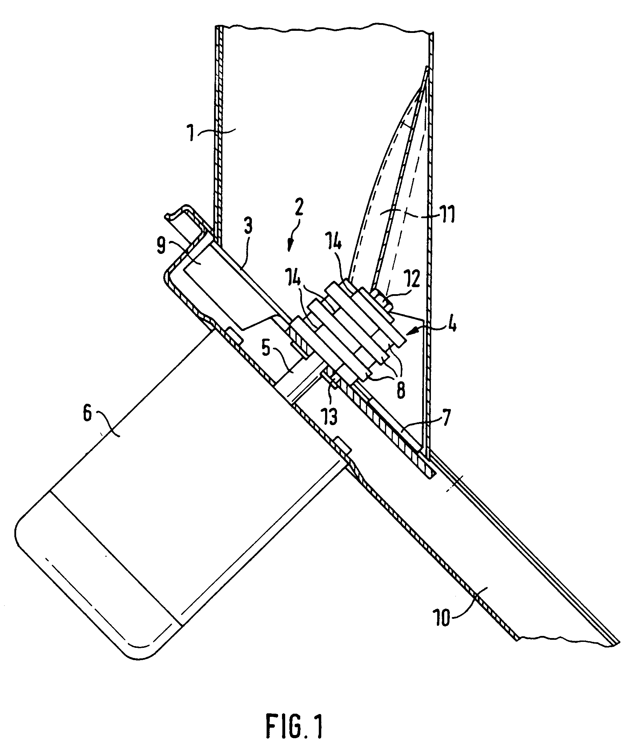

Im einzelnen zeigt Fig. 1 ein Zuführrohr 1 eines Gartenhäckslers, das in der Gebrauchslage vertikal ausgerichtet ist. Am Unterende des Zuführrohres 1 findet sich ein Schneidraum für das Häckselgut mit einem Schneidwerk 2, welches einen Messerteller 3 und einen Messersatz 4 aufweist. Der Messersatz 4 ist koaxial auf dem Messerteller 3 angeordnet und die Achse dieser Anordnung, die zugleich Drehachse ist, ist gegenüber der Vertikalachse des Zuführrohres 1 geneigt. Der Antrieb des Messertellers 3 mit dem Messersatz 4 erfolgt über die Abtriebswelle 5 eines Motors 6. Auf dem Messerteller 3 sind neben dem zentral angeordneten Messersatz 4 in radialer Richtung nach außen hin weitere Schneidmesser 7 vorhanden, und es finden sich auf dem Messerteller 3 in Fig. 1 nicht erkennbare Durchtritts öffnungen für das Häckselgut, das in einen Auswurfkanal 10 unterhalb des Messertellers 3 gelangt und darin mittels an die Unterseite des Messertellers 3 angeformte Ventilatorflügel 9 befördert wird.

Der Messersatz 4 besteht aus einzelnen, aufeinander liegenden Messerscheiben 8, die entlang ihres Umfanges mehrere vorstehende Schneiden 14 haben. Diese wirken mit einem ortsfesten Gegenhalter 11 zusammen, der eine Mitnahme des Häckselgutes in Drehrichtung des Messersatzes 4 verhindern soll. Die Sicherung des Messersatzes 8 auf dem Messerteller 3 erfolgt durch einen Spannbolzen 12, der entweder zentral am Messerteller 3 befestigt ist oder in die Abtriebswelle 5 eingreift, um dagegen zugleich den Messersatz 4 als auch den Messerteller 3 zu verspannen.

Der Messerteller 3 dient zugleich als Mitnehmerteller für den Messersatz 4, und er hat dazu zumindest eine Mitnehmeröffnung 13, in welche die benachbarte Messerscheibe 8 des Messersatzes 4 formschlüssig eingreift. Im übrigen erfolgt die Drehmitnahme der weiteren Messerscheiben 8 des Messersatzes 4 durch Drehmitnahmeglieder an den Messerscheiben 8 selbst, was im einzelnen nachstehend erläutert wird.

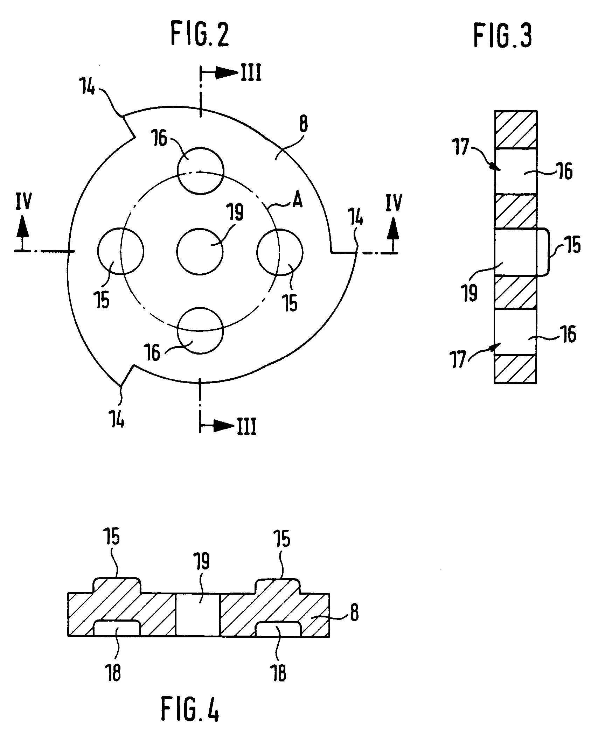

So zeigt Fig. 2 die eine, in der Regel nach unten hin anzuordnende Seite einer der Messerscheiben 8, an der Vorsprünge 15 in Gestalt von Nocken vorstehen, von denen man einen auch in Fig. 3 erkennt. Zwei der Vorsprünge 15 sind Vordiametral an dieser einen Seite der Messerscheibe 8 vorhanden, grundsätzlich können auch mehrere solcher Vorsprünge 15 in regelmäßiger Teilung auf einem Teilkreis angeordnet sein. Die Vorsprünge 15 in Gestalt von Nocken haben zweckmäßig kreisrunde Querschnitte und sind im wesentlichen zylindrisch, sie können allerdings für den formschlüssigen Eingriff, für den sie vorgesehen sind, entlang ihren Oberkanten Fasen oder Rundungen haben.

An ihrer anderen, zweiten Seite hat die Messerscheibe 8, wie die Figuren 3 und 4 verdeutlichen, Vertiefungen 17 und 18, die formschlüssig an die an der ersten Seite der Messerscheibe 8 vorstehenden Vorsprünge 15 angepaßt sind. Es handelt sich also um hohlzylindrische Vertiefungen 17, 18, in die die Vorsprünge 15 der benachbart der einen Messerscheibe 8 anzuordnenden nächsten Messerscheibe 8 hineinpassen. Dazu werden die Messerscheiben 8 koaxial aufeinandergestapelt, sie liegen mit ihren jeweils planparallelen beiden Seiten unmittelbar aneinander an, entsprechend werden die Vorsprünge 15 der einen Messerscheibe 8 vollständig von den Vertiefungen 17, 18 der anderen Messerscheibe 8 aufgenommen.

Voraussetzung dafür ist, daß die Vertiefungen 17, 18 an der anderen Seite der Messerscheibe 8 auf dem gleichen Teilkreis A wie die Vorsprünge 15 auf der ersten Seite der Messerscheibe 8 angeordnet sind, wobei die Teilung der Vorsprünge 15 und der Vertiefungen 17, 18 auf mehrere Eingriffslagen benachbarter Messerscheiben 8 abgestimmt ist. So haben die Vorsprünge 15 eine 180°-Teilung und die Vertiefungen 17, 18 eine 90°-Teilung, womit vier verschiedene Eingriffslagen zweier benachbarter Messerscheiben 8 möglich sind. Durch eine davon differierende Teilung der Schneiden 14 an der Peripherie der Messerscheiben 8 können deshalb von der fluchtenden Ausrichtung bis zu einem unregelmäßigen Versatz unterschiedliche Schneidenanordnungen in achsparalleler Richtung des Messersatzes 4 gewählt werden. Man kann damit auch dem Verschleiß der Schneiden 4 an den Messerscheiben 8 Rechnung tragen, indem man mit zunehmender Abnutzung eine mehr und mehr fluchtende Ausrichtung der Schneiden 4 entlang von Mantellinien des Messersatzes 4 wählt.

In praktischer Ausführung differieren die Teilungen der Schneiden 14 am Umfang der Messerscheiben 8 zu den Teilungen der Vorsprünge 15 sowie der Vertiefungen 17 und 18 dadurch, daß die Teilung der Schneiden 4 ungeradzahlig und die der Vorsprünge 15 sowie der Vertiefungen 17 und 18 geradzahlig ist. Vorteilhaft ist auch, eine nicht zu große Anzahl von Schneiden 14 an jeder Messerscheibe 8 vorzusehen, so hat beim dargestellten Ausführungsbeispiel die Messerscheibe 8 lediglich drei Schneiden 14 im 120 Grad Abstand entlang ihres Umfanges.

Die einen Vertiefungen 17 der Messerscheibe 8 werden durch Durchgangslöcher 16 gebildet, wie Fig. 3 zeigt. Die anderen Vertiefungen 18 an der zweiten Seite der Messerscheibe 8 sind durch den Verformungsvorgang zum Ausformen der nockenförmigen Vorsprünge 15 gebildet und stellen dazu in etwa die Negativkontur dar.

Mittig besitzt die Messerscheibe 8 ein weiteres Durchgangsloch 19, das für den Durchtritt des Spannbolzens 12 (Fig. 1) vorgesehen ist.

## Patentansprüche

1. Messersatz für das Schneidwerk eines Gartenhäckslers, bestehend aus einer Mehrzahl von Messerscheiben (8) mit entlang deren Umfangs vorstehenden Schneiden (14), die koaxial miteinander, aneinander anliegend auf einem drehend angetriebenen Mitnehmerteller (3) in den Schneidraum für das Häckselgut vorragend drehfest angeordnet werden,
dadurch gekennzeichnet,
daß jede Messerscheibe (8) an ihrer ersten Seite Vorsprünge (15) und an ihrer zweiten Seite Vertiefungen (17, 18) auf Teilkreisen (A) gleichen Durchmessers zur formschlüssigen Aufnahme der Vorsprünge (15) der jeweils benachbart anzuordnenden Messerscheibe (8) hat,
daß die Anzahl der Vertiefungen (17, 18) an der zweiten Seite der Messerscheiben (8) größer als die der Vorsprünge (15) an der ersten Seite ist, wobei die Teilung der Vertiefungen (17) und der Vorsprünge (15) auf mehrere zueinander drehwinkelversetzte Eingriffslagen benachbarter Messerscheiben (8) abgestimmt ist,
und daß die Teilung der Schneiden (14) am Umfang der Messerscheiben (8) von der der Vorsprünge (15) sowie der Vertiefungen (17, 18) verschieden ist.

2. Messersatz nach Anspruch 1,
dadurch gekennzeichnet,
daß die Vorsprünge (15) der Messerscheiben (8) die Gestalt vorstehender Nocken und die Vertiefungen (17, 18) der Messerscheiben (8) die Gestalt formschlüssig daran angepaßter Löcher haben.

3. Messersatz nach Anspruch 1 oder 2,
dadurch gekennzeichnet,
daß die Teilung der Schneiden (14) ungeradzahlig und die der Vorsprünge (15) sowie der Vertiefungen (17,18) geradzahlig ist.

4. Messersatz nach einem der Ansprüche 1 bis 3,
dadurch gekennzeichnet,
daß die Vorsprünge (15) einstückig an den Messerscheiben (8) angeformt sind.

5. Messersatz nach einem der Ansprüche 1 bis 4,
dadurch gekennzeichnet,
daß die Vertiefungen (17, 18) zumindest teilweise durch Durchgangslöcher (16) in den Messerscheiben (8) gebildet sind.

6. Messersatz nach einem der Ansprüche 1 bis 5,
dadurch gekennzeichnet,
daß die Vorsprünge (15) und die Vertiefungen (17, 18) der Messerscheiben (8) im Querschnitt kreisrund sind.

7. Messersatz nach einen der Ansprüche 1 bis 6
dadurch gekennzeichnet,
daß der Mitnehmerteller (3) den Vertiefungen (17, 18) der Messerscheiben (8) entsprechende Aufnahmeöffnungen (13) für die Vorsprünge (15) der benachbarten Messerscheibe (8) hat.

8. Messersatz nach einem der Ansprüche 1 bis 7,
daß die Messerscheiben (8) zentrale, miteinander deckungsgleiche Durchgangsöffnungen (19) für den Durchtritt eines Spannbolzens (12) zwecks axialer Sicherung am Mitnehmerteller (3) haben.

## Claims

1. Blade assembly for the cutting mechanism of a garden shredder, consisting of several blade discs (8) having cutting edges (14) projecting along the circumference thereof and mounted rotationally secured coaxial with each other adjoining one another on a rotary driven entrainment plate (3) projecting into the cutting area for the material being shredded,
characterised in that each blade disc (8) has on its first side projections (15) and on its second side indentations (17,18) on pitch circles (A) of identical diameter for the keyed engagement of the projections (15) of each adjoining blade disc (8), that the number of indentations (17,18) on the second side of the blade discs (8) is greater than that of the projections (15) on the first side wherein the division of the indentations and projections (15) conforms with several engagement positions of adjoining blade discs (8) off-set by a rotational angle relative to each other, and that the division of the cutting edges (14) on the circumference of the blade discs (8) is different from that of the projections (15) and indentations (17,18).

2. Blade assembly according to claim 1, characterised in that the projections (15) of the cutter blades (8) have the shape of projecting cams and the indentations (17,18) of the blade discs (8) have the shape of holes adapted for keyed engagement therewith.

3. Blade assembly according to claim 1 or 2 characterised in that the division of the cutting edges (14) is uneven and that of the projections (15) and indentations (17,18) is even.

4. Blade assembly according to one of claims 1 to 3 characterised in that the projections (15) are formed in one piece on the blade discs (8).

5. Blade assembly according to one of claims 1 to 4 characterised in that the indentations (17,18) are formed at least partially through full-length holes (16) in the blade discs (8).

6. Blade assembly according to one of claims 1 to 5 characterised in that the projections (15) and indentations (17,18) of the cutter discs (8) are circular in cross-section.

7. Blade assembly according to one of claims 1 to 6 characterised in that the entrainment plate (3) has receiving openings (13) for the projections (15) of the adjoining blade disc (8) and these openings correspond to the indentations (17,18) of the blade discs (8).

8. Blade assembly according to one of claims 1 to 7 characterised in that the blade discs (8) have several coinciding full-length openings (19) for passing through a tension bolt (12) for axial securement on the entrainment plate (3).

## Revendications

1. Jeu de lames pour le système de coupe d'un hâche-paille de jardin composé de plusieurs disques à couteaux (8) qui sont pourvus de tranchants (14) faisant saillie sur leur pourtour et sont disposés, résistants à la torsion, coaxialement et adjacents par rapport les uns aux autres sur un plateau entraîneur (3) rotatif, et font saillie dans la chambre de coupe des produits à hâcher,
caractérisé en ce que
chaque disque à couteaux (8) présente, sur sa première face, des saillies (15) et, sur sa deuxième face, des cavités (17,18) réparties sur des cercles partiels (A) de même diamètre, les-quelles sont destinées à accueillir, en engagement géométrique, les saillies (15) du disque à couteaux (8) voisin, respectif, et que
le nombre des cavités (17, 18) équipant la deuxième face des disques à couteaux (8) est supérieur au nombre des saillies (15) pourvoyant la première face, la répartition des cavités (17) et des saillies (15), sur plusieurs couches de prise de disques à couteaux (8) voisins décalées angulairement par rapport les unes aux autres, étant en accord, et que
la division des tranchants (14) sur le pourtour des disques à couteaux (8) diffère de celle des saillies (15) et des cavités (17, 18).

2. Jeu de lames selon la revendication 1,
caractérisé en ce que
les saillies (15) des disques à couteaux (8) sont conçues en forme d'ergots et que les cavités (17, 18) des disques à couteaux (8) présentent la forme de trous adaptés géométriquement aux ergots.

3. Jeu de lames selon la revendication 1,
caractérisé en ce que
les tranchants (14) sont divisés en nombres impairs tandis que les saillies (15) et les cavités (17, 18) sont divisées en nombres pairs.

4. Jeu de lames selon l'un des revendications 1 à 3, caractérisé en ce que
les saillies (15) sont formées d'une pièce avec les disques à couteaux (8) faisant corps avec eux.

5. Jeu de lames selon l'une des revendications 1 à 4, caractérisé en ce que
les cavités (17, 18), pratiquées dans les disques à couteaux (8) forment, du moins partiellement, des trous de passage (16).

6. Jeu de lames selon l'une des revendications 1 à 5, caractérisé en ce que
les saillies (15) et les cavités (17, 18) des disques à couteaux (8) présentent une section transversale ronde.

7. Jeu de lames selon l'une des revendications 1 à 6, caractérisé en ce que
le plateau entraîneur (3) présente des ouvertures de réception (13) correspondant aux cavités (17, 18) des disques à couteaux (8) et destinées à accueillir les saillies (15).

8. Jeu de lames selon l'une des revendications 1 à 7, caractérisé en ce que
les disques à couteaux (8) présentent des ouvertures de passage (19) centrales, coïncidentes pour le passage d'un boulon de serrage (12) destiné à les assurer axialement par rapport au plateau entraîneur (3).
